# EUROPEAN PATENT APPLICATION

(11) **EP 4 692 809 A1**
(43) Date of publication of application: **11.02.2026**
(21) Application number: 24784625.6
(22) Date of filing: 22.02.2024
(51) Int. Cl.: G01N 35/10

(54) **PROBE POSITION DETECTION DEVICE AND AUTOMATIC ANALYSIS DEVICE**

(30) Priority: 03.04.2023 JP 2023059907
(71) Applicant: HITACHI HIGH-TECH CORPORATION, Tokyo 105-6409 (JP)
(72) Inventor: OCHI Manabu, Tokyo 100-8280 (JP); SUZUKI Yoichiro, Tokyo 105-6409 (JP); NAKAJIMA Satoshi, Tokyo 105-6409 (JP); ETOH Jun, Tokyo 100-8280 (JP)
(74) Representative: Strehl & Partner mbB
(86) International application number: PCT/JP2024/006500
(87) International publication number: WO 2024/209823

(57) **Abstract**

To accurately detect a position of a probe including a deviation in a depth direction from a target stop position. A light source emits illumination light toward a probe, and an imaging unit captures an image of periphery of the probe. A calculation unit calculates a position of the probe according to an optical image which is formed due to reflected light of the illumination light by the probe and captured by the imaging unit. The light source irradiates a tip of the probe with the illumination light from an oblique direction in a state where the tip of the probe is above a target stop position of the probe. The imaging unit captures the optical image formed on a plane near the target stop position by the illumination light being reflected by a surface of a tip portion of the probe. The calculation unit acquires the optical image from the imaging unit and calculates a position of the tip of the probe when the tip of the probe is lowered to the same height as the target stop position.

## Description

### Technical Field

The present invention relates to a probe position detection device that detects a position of a probe used for dispensing a sample, a reagent, or the like in an automatic analyzer or the like, and an automatic analyzer including the probe position detection device.

### Background Art

A probe used for dispensing a sample or a reagent in an automatic analyzer is periodically replaced from a viewpoint of maintaining dispensing accuracy. At the time of dispensing, a tip of the probe is inserted into a plurality of narrow spaces such as sample containers, reagent containers, or cleaning holes. Therefore, every time the probe is replaced in the automatic analyzer, it is necessary to adjust a tip position of the probe with respect to a target stop position set in the sample container, the reagent container, the cleaning hole, or the like.

In a sample processing device disclosed in PTL 1, in order to easily and accurately adjust a position of a moving portion regardless of complexity of a moving path of the moving portion, when an abnormality occurs in a sample analyzer, cuvette is imaged using a camera provided in the sample analyzer. An adjustment amount of a reagent dispensing unit is detected based on the captured image, and the reagent dispensing unit is adjusted by the detected adjustment amount.

### Citation List

### Patent Literature

PTL 1: JP2012-32310A

### Summary of Invention

### Technical Problem

In the sample processing device described in PTL 1, the tip of the probe is imaged at a target stop position, and a deviation in a left-right direction between a center line of the acquired image and the target stop position is detected as the adjustment amount. However, this device cannot detect a deviation amount of the image in a depth direction. Therefore, even when the tip of the probe coincides with the target stop position on the captured image, the tip of the probe may be adjusted to a position deviated from the target stop position in the depth direction.

The invention provides a probe position detection device capable of accurately detecting a position of a probe including a deviation in a depth direction from a target stop position, and an automatic analyzer including the probe position detection device.

### Solution to Problem

According to an aspect of the present invention, there is provided a probe position detection device that detects a position of a probe, the probe position detection device including: a light source configured to emit illumination light toward the probe; an imaging unit configured to capture an image of periphery of the probe; and a calculation unit configured to calculate the position of the probe according to an optical image that is formed due to reflected light of the illumination light on the probe and captured by the imaging unit. The light source irradiates a tip of the probe with the illumination light from an oblique direction downward from an upper position when viewed from the tip of the probe in a state where the tip of the probe is above a target stop position of the probe. The imaging unit captures the optical image formed on a plane near the target stop position by the illumination light being reflected on a surface of a tip portion of the probe. The calculation unit acquires the optical image from the imaging unit and calculates a position of the tip of the probe when the tip of the probe is lowered to a same height as the target stop position.

### Advantageous Effects of Invention

According to the present invention, it is possible to provide a probe position detection device capable of accurately detecting a position of a probe including a deviation in a depth direction from a target stop position.

### Brief Description of Drawings

[FIG. 1] FIG. 1 is a schematic configuration diagram of an automatic analyzer 10 according to a first embodiment.
[FIG. 2] FIG. 2 is a side view of a reagent dispensing device 14 to which an imaging unit 32 is attached.
[FIG. 3] FIG. 3 is a back view of the reagent dispensing device 14 to which the imaging unit 32 is attached.
[FIG. 4] FIG. 4 is a side view showing an optical path of illumination light projected on a device surface S at a same height as a target stop position 4.
[FIG. 5] FIG. 5 is a back view showing the optical path of the illumination light projected on the analyzer surface S at the same height as the target stop position 4.
[FIG. 6] FIG. 6 is a schematic diagram showing an example of an image captured by the imaging unit 32 (camera 321).
[FIG. 7] FIG. 7 is a schematic diagram showing an example of an image captured by the imaging unit 32 (camera 321).
[FIG. 8] FIG. 8 is a side view showing a state in which the imaging unit 32 is fixed to a support device separate from a dispensing device in an automatic analyzer 10 according to a second embodiment.
[FIG. 9] FIG. 9 is a schematic diagram showing an example of an image captured by the imaging unit 32 (camera 321) in an automatic analyzer 10 according to a third embodiment.
[FIG. 10] FIG. 10 is a schematic diagram showing an example of an image captured by the imaging unit 32 (camera 321).

### Description of Embodiments

Hereinafter, the present embodiment will be described with reference to the accompanying drawings. In the accompanying drawings, functionally the same elements may be denoted by the same reference numerals. Although the accompanying drawings illustrate embodiments and examples according to the principle of the present disclosure, the accompanying drawings are for understanding the present disclosure and are not intended to interpret the present disclosure in a limited manner. The description of the present description is merely a typical illustration and does not limit the scope of the claims or application examples of the present disclosure in any sense.

Embodiments are described in sufficient details for those skilled in the art to implement the present disclosure, but it should be understood that other implementations and aspects are possible, and changes in configurations and structures and replacement of various elements are possible without departing from the scope and spirit of the technical idea of the present disclosure. Therefore, the following description is not to be construed as being limited thereto.

### [First Embodiment]

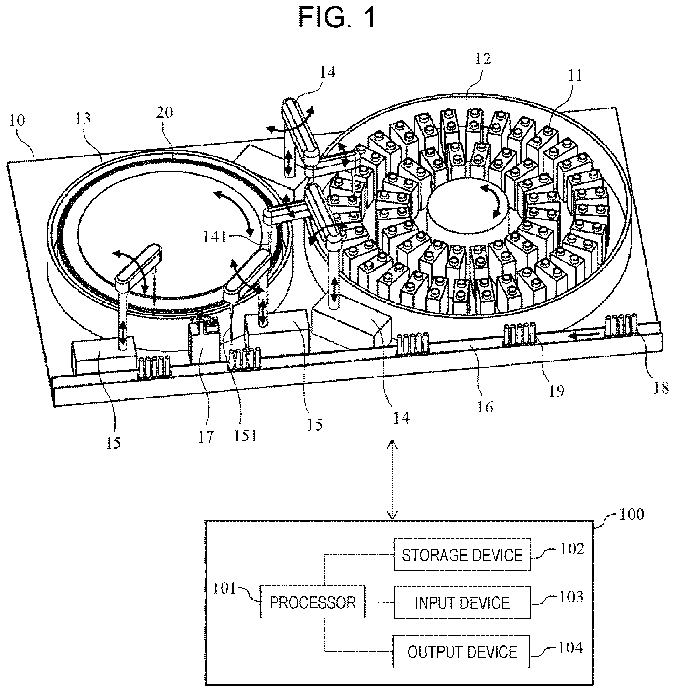

First, a configuration of an automatic analyzer 10 according to a first embodiment will be described with reference to FIG. 1 and the like. As shown in FIG. 1, the automatic analyzer 10 includes, for example, a reagent disk 12, a reaction disk 13, a plurality of reagent dispensing devices 14, a plurality of sample dispensing devices 15, a transport line 16, a cleaning tank 17, and a control device 100.

The reagent disk 12 is configured to be rotatable about a rotation axis, and holds a plurality of reagent containers 11 therein. The reaction disk 13 is similarly configured to be rotatable about a rotation axis, and holds a plurality of reaction cells 20 arranged in a circumferential direction.

The cleaning tank 17 cleans a probe 151 of the sample dispensing device 15. The transport line 16 transports a rack 18. The rack 18 holds a sample container 19 containing a sample. The sample is, for example, a biological sample derived from blood such as serum or whole blood or derived from urine.

Each of the reagent dispensing devices 14 includes a probe 141 for dispensing a reagent contained in the reagent container 11, and is configured to be capable of moving the probe 141 in a horizontal direction and an upper-lower direction. The reagent dispensing device 14 aspirates the reagent into the probe 141 and dispenses the reagent into the reaction cell 20.

Each of the sample dispensing devices 15 includes a probe 151 for dispensing a sample contained in the sample container 19, and is configured to be capable of moving the probe 151 in the horizontal direction and the upper-lower direction. The sample dispensing device 15 aspirates the sample into the probe 151 and dispenses the sample into the reaction cell 20. The reagent and the sample dispensed into the reaction cell 20 are stirred by a stirring device (not shown) to obtain a reaction solution.

The reagent dispensing device 14 is configured to be capable of horizontally moving the probe 141 to a position directly above each of a stop position for aspirating the reagent from the reagent container 11, a stop position for dispensing the reagent to the reaction cell 20, and a stop position for washing away the reagent attached to the probe 141 in a cleaning tank (not shown), and then lowering (vertically moving) the probe 141 to a height of each stop position. Similarly, the sample dispensing device 15 is configured to be capable of horizontally moving the probe 151 to a position directly above each of a stop position for aspirating the sample from the sample container 19, a stop position for dispensing the sample to the reaction cell 20, and a stop position for washing away the sample attached to a tip of the probe 151 in the cleaning tank 17, and then lowering the probe 151 to each stop position.

The control device 100 can be implemented by a general computer device, and includes, for example, a processor 101, a storage device 102, an input device 103, and an output device 104.

The processor 101 controls an operation of the automatic analyzer 10 according to a program stored in the storage device 102. The storage device 102 can be implemented by an internal memory, an external storage, or the like, and stores programs and parameters necessary for processing of the processor 101. The input device 103 may be implemented with, for example, a mouse, a keyboard, or a touch panel. The output device 104 may be implemented with, for example, a display, a speaker, or a touch panel.

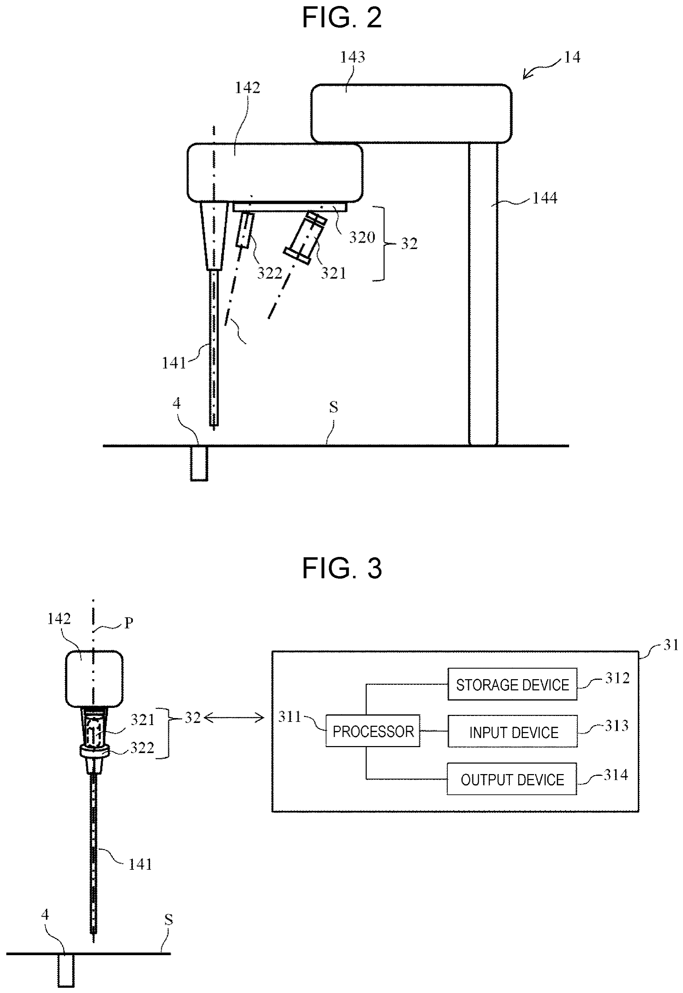

A configuration of the reagent dispensing device 14 will be described with reference to the schematic diagram of FIG. 2. The sample dispensing device 15 has substantially the same configuration.

The reagent dispensing device 14 includes the probe 141, and is configured to be capable of holding and moving the probe 141 by arms 142, 143 and a shaft 144. The reagent dispensing device 14 includes an imaging unit 32 for imaging the probe 141. FIG. 2 shows a state in which the probe 141 is stopped above the target stop position 4. The imaging unit 32 constitutes a probe position detection device for detecting the position of the probe 141.

In order to prevent a tip of the probe 141 of the first embodiment from colliding with the device, a tip position of the probe 141 is adjusted by stopping the probe 141 slightly above the target stop position 4, rather than lowering the tip of the probe 141 to a height of the target stop position 4 (analyzer surface S).

A base end portion (upper end) of the probe 141 is held by one end of the arm 142. The arm 142 is rotatably coupled to the arm 143. Further, the arm 143 is also rotatably coupled to the shaft 144. FIG. 2 shows a state in which the arm 142 and the arm 143 are aligned on a straight line. The shaft 144 is configured to be rotatable and vertically movable by a motor (not shown). The arm 143 may not be provided, and in this case, the arm 142 is connected to the shaft 144.

The imaging unit 32 includes, for example, a camera 321 and a light source 322. The camera 321 may be a monocular camera including an imaging element and a lens. The camera 321 is provided such that an optical axis thereof is on the same plane as a center axis of the probe 141. The camera 321 is disposed such that the optical axis thereof is directed slightly downward from the tip of the probe 141, and images the tip of the probe 141 and a periphery of the target stop position 4 during adjustment of the tip position of the probe 141.

The light source 322 emits illumination light collimated at least in a center axis direction of the probe 141 to illuminate a tip portion of the probe 141 disposed above the target stop position 4 from an oblique direction (a direction from an upper position to a lower position when viewed from the tip of the probe 141). The imaging unit 32 is attached below a bottom surface of the arm 142 and on a rear side of the probe 141 (a position farther than the probe 141 when viewed from the target stop position 4 when the probe 141 approaches the target stop position 4) by an attachment member 320.

FIG. 3 is a back view of a periphery of the imaging unit 32 when viewed from a rear side (camera 321 side). In FIG. 3, illustration of the arm 143 and the shaft 144 is omitted. A plane including the optical axis of the camera 321 and the center axis of the probe 141 will be described as a plane P (indicated by a two-dot chain line).

It is preferable that the light source 322 is disposed symmetrically with respect to the plane P (at a position not biased to one side of the plane P). That is, it is preferable that the center axis of the probe 141, the optical axis of the camera 321, and the optical axis of the light source 322 are all disposed in the plane P. Further, it is desirable that a light beam of the illumination light emitted from the light source 322 does not intersect the plane P. A calculation unit 31 can be implemented by, for example, a computer device, and includes, for example, a processor 311, a storage device 312, an input device 313, and an output device 314. The calculation unit 31 calculates the position of the probe 141 according to an optical image which is formed due to reflected light of the illumination light from the light source 322 by the probe 141 and is captured by the camera 321.

The processor 311 controls an operation of the imaging unit 32 according to a program stored in the storage device 312. The storage device 312 can be implemented with, for example, an internal memory, an external storage, or the like, and stores programs and parameters necessary for processing of the processor 311. The input device 313 may be implemented with, for example, a keyboard, a numeric keypad, or a touch panel. The output device 314 may be implemented with, for example, a display, a speaker, a touch panel, or the like. The calculation unit 31 communicates with the imaging unit 32 in a wired or wireless manner and receives an image captured by the camera 321. The calculation unit 31 may be implemented using the same computer device as the control device 100, or may be implemented by an independent computer device.

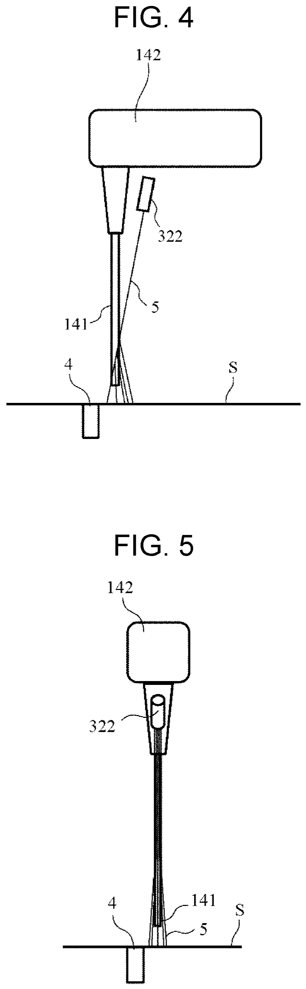

FIGS. 4 and 5 are a side view and a back view showing an optical path of the illumination light emitted from the light source 322. As indicated by reference numeral 5 in FIG. 4, when the tip portion of the probe 141 is made of metal and has a mirror-shaped surface, the illumination light from the light source 322 is specularly reflected by a surface of the tip portion of the probe 141 and is incident on the analyzer surface S located at the same height as the target stop position 4 below the tip portion.

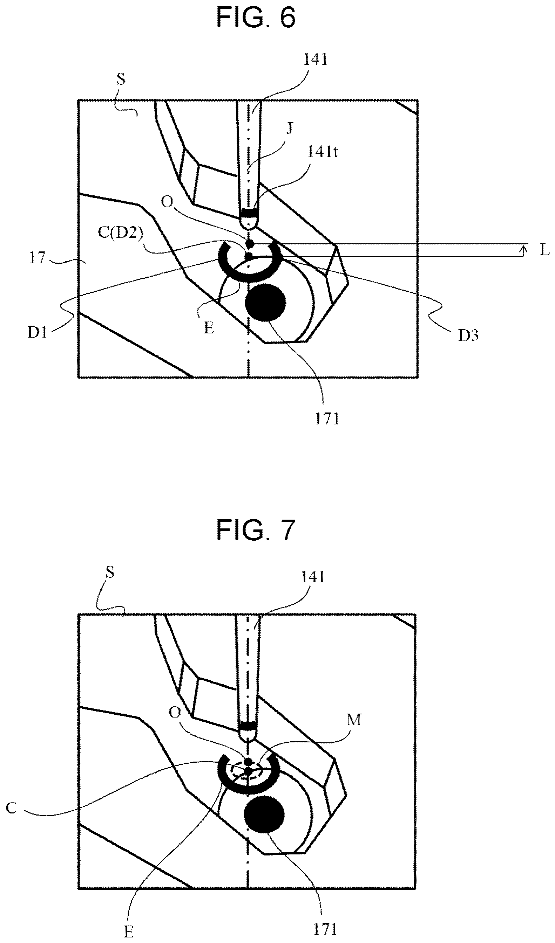

An example of an image obtained when light emitted from the light source 322 and specularly reflected by a surface of the probe 141 is incident on the analyzer surface S will be described with reference to FIG. 6. The light reflected by the surface of the tip portion of the probe 141 forms an optical image E on the analyzer surface S due to the reflected light. The optical image E is an optical image of an elliptic arc curve having a pixel value higher than that of a surrounding. Since the optical image E is caused by the reflected light emitted from the light source 322 on one side of the probe 141 and reflected by the probe 141, a shape of the optical image E is not an elliptical shape but a partially missing (opened) elliptic arc shape.

The calculation unit 31 extracts the optical image E projected on the analyzer surface S from the image captured by and received from the camera 321, approximates an elliptic arc curve from the optical image E, calculates a center position C of the approximated elliptic arc, and calculates a center position O of the tip of the probe 141 on the analyzer surface S according to a calculation result. Based on a deviation amount between the calculated center position O of the tip of the probe 141 and the target stop position 4 (a center of the cleaning hole 171), an operation amount of movement in the reagent dispensing device 14 that moves the probe 141 in the horizontal direction is adjusted, and values of the parameters stored in the storage device 102 are updated.

An example of the target stop position 4 of the probe 141 is the cleaning hole 171 disposed in the cleaning tank 17. Since the probe 141 is inserted into the cleaning hole 171 and then cleaned, it is necessary to control the position of the probe 141 so as to move the probe 141 to a center of the cleaning hole 171.

A curvature of the elliptic arc curve approximated from the optical image E changes as an angle or position of the illumination light incident on a surface 141t of the tip portion of the probe 141 changes. However, a change in the center position C of the elliptic arc is small. A distance L between the center position O of the probe 141 and the center position C is a constant value determined according to an outer diameter of the probe 141. In the arrangement of the light source 322 shown in FIG. 2, an incident direction of the illumination light is on a center line J (two-dot chain line) on the left and right of the image.

In the above example, the optical image E is approximated by the elliptic arc, but instead of or in addition to this, it is also possible to detect, as the center position C, a midpoint D2 between a point D1 at which a coordinate on a horizontal axis is the minimum and a point D3 at which a coordinate on the horizontal axis is the maximum among pixels having pixel values equal to or greater than a certain threshold on the captured image. Coordinates of a pixel shifted upward from the coordinates of the center position C by the number of pixels corresponding to the constant distance L are the center position O of the probe 141.

When imaging is performed such that the tip portion of the probe 141 is included in an imaging range of the camera 321, it is possible to prevent a decrease in detection accuracy due to an assembly error or an attachment error of the imaging unit 32. Specifically, a center axis A (one-dot chain line) of the probe 141 can be estimated by detecting the tip portion of the probe 141 (FIG. 7). Therefore, even if the center axis of the probe 141, the optical axis of the camera 321, and the optical axis of the light source 322 are disposed so as to deviate from the same plane, it is possible to obtain an intersection point between a circle M (broken line) having a radius of the constant distance L from the center position C of the elliptic arc curve approximating the optical image E and the center axis A of the probe 141. The intersection point can be more accurately detected as the center position O of the tip of the probe 141 when the tip of the probe 141 is lowered to the same height as the cleaning hole 171.

In a case where the tip portion of the probe 141 is made of metal or the like having a high specular reflectance, when the illumination light is reflected by the tip of the probe 141, a specular reflection light component protrudes and increases, and a contour of the optical image E projected onto the analyzer surface S becomes clear, so that the optical image E can be clearly detected on the image. In addition, since a directivity of the light specularly reflected by the surface 141t of the tip portion of the probe 141 is increased, approximation accuracy of the optical image E by the elliptic arc curve is improved.

The illumination light emitted from the light source 132 may be parallel light. In this case, since the directivity of the light specularly reflected by the surface 141t of the tip of the probe 141 increases, the approximation accuracy of the optical image E projected on the analyzer surface S by the elliptic arc is improved.

As described above, according to the first embodiment, the optical image E formed on the analyzer surface S at the same height as the target stop position 4 is approximated by the elliptic arc to detect the coordinates of the center position C, and the intersection point between the center line J of the probe 141 and the analyzer surface S, that is, the center position O of the tip of the probe 141 when the tip of the probe 141 is lowered to the same height as the target stop position 4 can be obtained using the coordinates of the center position C. Since the obtained center position O of the tip of the probe 141 is on the same plane as the target stop position 4, a distance between the center position O of the tip of the probe 141 and the target stop position 4 becomes a deviation in an in-plane direction between the center position O of the tip of the probe 141 and the target stop position 4.

The imaging unit 32 can be similarly attached to the sample dispensing device 15, and can also detect the position of the probe 151 attached to the sample dispensing device 15. That is, by imaging the periphery of the target stop position while irradiating the tip of the probe 151 of the sample dispensing device 15 with illumination light, it is possible to detect an amount of positional deviation between the center position of the tip of the probe 151 and the target stop position. The imaging unit 32 may be attached to another device instead of the dispensing device.

The imaging unit 32 may be configured to be attachable to and detachable from the dispensing device or the like. By being configured to be attachable and detachable, the imaging unit 32 may be attached to the dispensing device only when the position of the probe is adjusted, and the imaging unit 32 may be detached from the dispensing device or the like during a normal analysis operation. Since a mass of the imaging unit 32 is eliminated during the analysis operation by the detachable configuration, a load on the motor that drives the dispensing device can be reduced. As a result, throughput of analysis can be improved. In addition, for example, when a magnet is attached to the imaging unit 32 and a magnetic body protrudes from the bottom surface of the arm 142, positioning and attachment and detachment work of the imaging unit 32 are facilitated.

### [Second Embodiment]

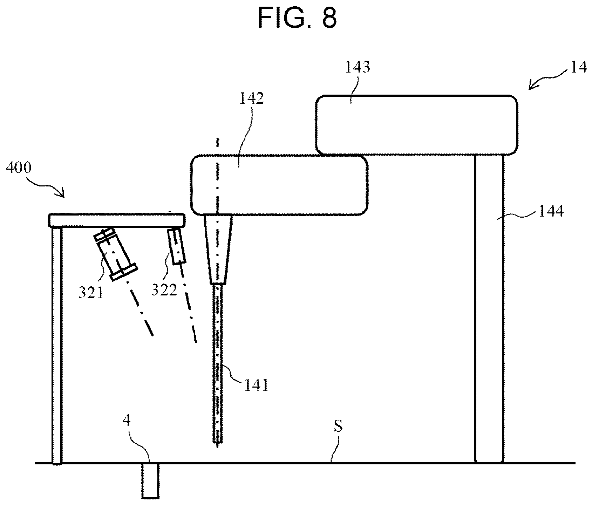

An automatic analyzer 10 according to a second embodiment will be described with reference to FIG. 8. FIG. 8 is a side view showing the imaging unit 32 of the automatic analyzer 10 according to the second embodiment. An overall structure of the automatic analyzer 10 according to the second embodiment may be the same as that of the first embodiment (FIG. 1), and thus redundant description will be omitted.

In the automatic analyzer 10 according to the first embodiment, the imaging unit 32 can be attached to the bottom surface of the arm 142 of the dispensing device. On the other hand, in the second embodiment, as shown in FIG. 8, the imaging unit 32 can be fixed to a support device 400 which is provided near the dispensing devices 14 and 15 and separately from the dispensing devices 14 and 15. The directions of the optical axes of the camera 321 and the light source 322, the arrangement relationship, and the like may be the same as those in the first embodiment. The separate support device 400 may be provided in each of the plurality of reagent dispensing devices 14 and the sample dispensing devices 15. Alternatively, the support device 400 itself can be moved and fixed near the dispensing devices 14, 15 in which the probes 141, 151 need to be replaced.

According to the second embodiment, the same effect as that of the first embodiment can be obtained. In addition, since the separate support device 400 is provided, the configuration of the dispensing devices 14 and 15 can be simplified.

### [Third Embodiment]

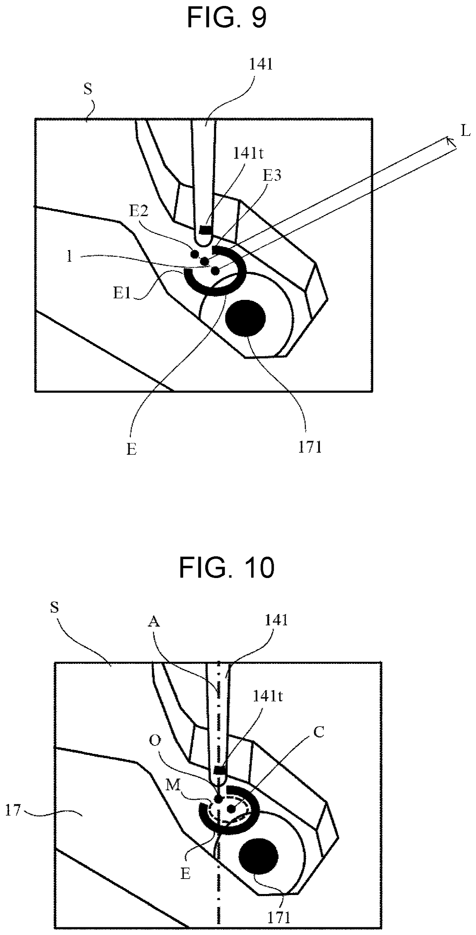

An automatic analyzer 10 according to a third embodiment will be described with reference to FIG. 9. FIG. 9 shows an example of an image captured by the imaging unit 32 of the automatic analyzer 10 according to the third embodiment. An overall structure of the automatic analyzer 10 according to the third embodiment may be the same as that of the first embodiment (FIG. 1), and thus redundant description will be omitted.

In the above-described embodiments, the case where the center axis of the probe 141, the optical axis of the camera 321, and the optical axis of the light source 322 are on the same plane P is described as an example. On the other hand, in the third embodiment, the optical axis of the camera 321 may not be on the same plane P, and the optical axis of the camera 321 may be set in a direction intersecting the plane P.

Even when the optical axis of the camera 321 is not on the same plane P but intersects at a predetermined angle, the image captured by the camera 321 is the optical image E having an elliptic arc shape with an opening, which is approximated by the elliptic arc curve, as in the first embodiment.

An opening portion of the elliptic arc curve is formed in a region where the illumination light is blocked by the probe 141 and the illumination light specularly reflected by the surface 141t of the tip portion of the probe 141 is not projected. In other words, the opening portion of the elliptic arc curve is generated on a side opposite to the incident direction of the illumination light from the light source 322 with respect to the center axis of the probe 141. That is, as shown in FIG. 9, an extending direction of a line segment 1 (dotted line) extending from the midpoint E2 between both ends E1 and E3 of the opening of the optical image E (elliptic arc curve) to the center position C of the elliptic arc curve becomes the incident direction of the illumination light. Therefore, the optical image E formed on the analyzer surface (plane) S at the same height as the cleaning hole 171 is approximated by the elliptic arc curve to detect the coordinates of the center C, and the coordinates of the center C are moved by the constant distance L along the line segment 1 in a direction of the point E2, thereby making it possible to obtain the intersection point between the center axis of the probe 141 and the analyzer surface S. This intersection point corresponds to the center position O of the tip of the probe 141 when the tip of the probe 141 is lowered to the height of the cleaning hole 171.

When imaging is performed such that the tip portion of the probe 141 is included in the imaging range of the camera 321, it is possible to prevent the decrease in detection accuracy due to an assembly error or an attachment error of the imaging unit 32. Specifically, the center axis A (one-dot chain line) of the probe 141 can be estimated by detecting the tip portion of the probe 141 (FIG. 10). An intersection point between the circle M (broken line) having a center at the center position C of the elliptic arc curve approximating the optical image E and the constant distance L as the radius and the center axis A of the probe 141 can be obtained. The intersection point can be more accurately detected as the center position O of the tip of the probe 141 when the tip of the probe 141 is lowered to the same height as the cleaning hole 171. In both cases of FIGS. 9 and 10, the obtained distance between the center position O of the tip of the probe 141 and the cleaning hole 171 becomes the deviation in the in-plane direction between the center position of the tip of the probe 141 and the target stop position.

The invention is not limited to the above embodiments and includes various modifications. For example, the above embodiments are described in detail to facilitate understanding of the invention, and it is not necessary to include all the configurations described above. A part according to one embodiment may be replaced with a configuration according to another embodiment. A configuration of another embodiment can be added to a configuration of one embodiment. A part of a configuration of each embodiment may be added, deleted, or replaced with a part of a configuration of another embodiment.

### Reference Signs List

10: automatic analyzer
11: reagent container
12: reagent disk
13: reaction disk
14: reagent dispensing device
15: sample dispensing device
16: transport line
17: cleaning tank
18: rack
19: sample container
20: reaction cell
5: optical path
141: probe
142, 143: arm
144: shaft
151: probe
171: cleaning hole
32: imaging unit
320: attachment member
321: camera
322: light source
31: calculation unit
4: target stop position
S: analyzer surface
L: constant distance
E: optical image

## Claims

1. A probe position detection device that detects a position of a probe, the probe position detection device comprising:
a light source configured to emit illumination light toward the probe;
an imaging unit configured to capture an image of periphery of the probe; and
a calculation unit configured to calculate a position of the probe according to an optical image which is formed due to reflected light of the illumination light by the probe and captured by the imaging unit, wherein
the light source irradiates a tip of the probe with the illumination light from an oblique direction downward from an upper position when viewed from the tip of the probe in a state where the tip of the probe is above a target stop position of the probe,
the imaging unit captures the optical image formed on a plane near the target stop position by the illumination light being reflected by a surface of a tip portion of the probe, and
the calculation unit acquires the optical image from the imaging unit and calculates a position of the tip of the probe when the tip of the probe is lowered to a same height as the target stop position.

2. The probe position detection device according to claim 1, wherein
the illumination light is parallel light.

3. The probe position detection device according to claim 2, wherein
the imaging unit is set such that an imaging range includes the tip of the probe.

4. The probe position detection device according to claim 1, wherein
the light source and the imaging unit are provided such that an optical axis of the imaging unit, an optical axis of the light source, and a center axis of the probe are on a same plane.

5. The probe position detection device according to claim 1, wherein
the tip portion of the probe is made of metal.

6. The probe position detection device according to claim 1, wherein
the imaging unit is attached to a bottom surface of an arm constituting a dispensing device to which the probe is attached.

7. The probe position detection device according to claim 1, wherein
the imaging unit is configured to be detachably attached to a dispensing device to which the probe is attached or to a support device provided near the dispensing device.

8. An automatic analyzer comprising:
a dispensing device to which a probe that aspirates and dispenses a sample or a reagent is mounted; and
a probe position detection device that detects a position of the probe, wherein
the probe position detection device includes
a light source configured to emit illumination light toward the probe,
an imaging unit configured to capture an image of periphery of the probe, and
a calculation unit configured to calculate a position of the probe according to an optical image which is formed due to reflected light of the illumination light by the probe and captured by the imaging unit,
the light source irradiates a tip of the probe with the illumination light from an oblique direction downward from an upper position when viewed from the tip of the probe in a state where the tip of the probe is above a target stop position of the probe,
the imaging unit captures the optical image formed on a plane near the target stop position by the illumination light being reflected by a surface of a tip portion of the probe, and
the calculation unit acquires the optical image from the imaging unit and calculates a position of the tip of the probe when the tip of the probe is lowered to a same height as the target stop position.
